# EUROPEAN PATENT SPECIFICATION

(11) **EP 1 413 349 B1**
(45) Date of publication and mention of the grant of the patent: **29.03.2006**
(21) Application number: 02079449.1
(22) Date of filing: 25.10.2002
(51) Int. Cl.: B01D 53/86

(54) **Process for the catalytic decomposition of nitrous oxide (N2O)**
Verfahren zur katalytischen Zersetzung von Distickstoffmonoxid (N2O)
Procédé pour la décomposition catalytique d'oxyde nitreux (N2O)

(43) Date of publication of application: 28.04.2004
(73) Proprietor: Radici Chimica Spa, 28100 Novara (IT)
(72) Inventor: Alini, Stefano, 27051 Cava Manara (Pavia) (IT); Frigo, Emilio, 35137 Padova (IT); Rinaldi, Cinzia, 28064 Carpignano Sesia (Novara) (IT)
(74) Representative: Pistolesi, Roberto

(56) References cited:
- EP-A- 1 040 862
- US-A- 3 467 492
- US-A- 5 759 500

## Description

The following is a description of an extremely efficient catalytic process for converting nitrous oxide (N₂O) into gaseous nitrogen and oxygen.

Nitrous oxide, in contrast to other higher nitrogen oxides (NOₓ), is not commonly considered to be an atmospheric pollutant. Studies dating back to the early 1990s indicate that the concentration of nitrous oxide in the earth's atmosphere may at present be increasing by approx. 0.2% a year, and that this increase is attributable to human activity [Thiemens and Trogler, Science, 251 (1991) 932].

Nitrous oxide constitutes the main stratospheric source of NO and is believed to be implicated in the destruction of the ozone layer; moreover, it has been recognised as a gas which contributes to producing the greenhouse effect. Since atmospheric nitrous oxide has a life of approx. 150 years, several studies have been undertaken to identify the sources of this contaminant and the methods for limiting its emission. The primary sources of nitrous oxide emissions are, in descending order, agriculture, biomass combustion, the combustion of hydrocarbons for heating or locomotion, and certain chemical processes. Emissions which may--in the short term--be reduced are those deriving from chemical processes and those stemming from heating systems, i.e. those emitted in definite places and which can therefore be acted upon with dedicated abatement devices.

Recent studies have identified various industrial processes which significantly contribute to raising N₂O levels in the earth's atmosphere, and in particular: i) fluid-bed burning of wastewater runoff or industrial waters; ii) chemical processes for the production of or utilising nitric acid. The two areas differ in particular in their composition (concentration of N₂O, presence of deactivating agents) and temperature and volume of gasses discharged. Nitrous oxide is a by-product in the production of monomers utilised in producing polyamides 6.6 and 6.12. The polyamides cited are obtained by means of polycondensation of a dicarboxylic acid with a di-amide. The most widely utilised dicarboxylic acid is adipic acid, which in the year 2000 was produced in the quantity of approx. 2.3x10⁶ tons. According to Thiemens and Trogler's calculations, each mole of adipic acid yields one mole of nitrous oxide. This suggests that 1.6x10¹⁰ moles of N₂O are emitted into the atmosphere and that therefore 10% of the nitrous oxide emitted annually into the atmosphere derives from this process alone.

Numerous strategies have been adopted for eliminating nitrous oxide from adipic-acid production plant gaseous emissions. Among the main ones have been: a) reutilising nitrous oxide as an oxidant for producing phenol, b) thermal destruction and c) catalytic decomposition. Of these two destruction processes, the catalytic system has proved to the most economical. Numerous catalysts have been described in the literature, but few of these have been tried in conditions which are relevant to practical industrial applications.

N₂O content in adipic acid plant gaseous emissions can run as high as 65%, but more frequently peaks at 40% by volume. In general, these gases also contain water, oxygen and carbon dioxide. Water content is usually at the saturation level for the gas in question--the exact amount present being a function of system temperature and working pressure--but in general, a maximum of 1-2% by volume. Oxygen is always present, generally ranging from 5 to 15% by volume, and in contrast to carbon dioxide, which does not affect reactions, can influence reaction kinetics, depending on the type of catalyst utilised. Traces of volatile organic compounds and of NOₓ may also be present. NOₓ concentrations of up to 2000 ppm do not influence the present process. At the present state of the art, NOₓ removal is a known process, and can be carried out using various technologies designed for its recovery and/or destruction.

The catalytic decomposition of nitrous oxide exhibits several characteristics which do not depend on the type of catalytic system utilised. The principal purpose of this invention is the assessment and control of these aspects. In particular, the N₂O decomposition reaction is highly exothermic (-19.6 Kcal/mole). Unfortunately, most catalytic systems are unable to trigger the reaction at temperatures below several hundred degrees Celsius (generally above 300°C). Since the reaction is carried out in fixed-bed reactors on N₂O-laden industrial emissions, in the absence of an adequate control system, marked increases in temperature (up to and beyond 1000°C) can take place on the catalytic bed.

The exothermic nature of the reaction therefore gives rise to a series of problems which- if an industrial process is to be set up-must be dealt with and resolved. For example, high temperatures may lead to the following problems 1) damage: sintering of catalysts or of their supports-a well-known phenomenon-reducing catalytic activity and shortening catalyst life. 2) high investment costs for and careful selection of special heat-resistant materials used in the construction of reactor bodies. 3) Environmental regulation and compliance: the higher the temperature on the catalytic bed, the greater the risk of forming higher nitrogen oxides (NOₓ) which are subject to strict environmental laws.

Generally, it has been suggested that, in order to control catalytic bed temperature, the stream containing nitrous oxide be diluted. The dilution gas is generally composed of a part of the flow, purified (USP 6,056,928) and properly cooled so that the gas may act as a cooling agent (USP 5,200,162). This system, however, presents several disadvantages.

For the reaction temperature to be controlled effectively, the concentration of nitrous oxide entering the reactor generally must not exceed 15% by volume. However, as stated previously, plant emissions may contain as much as 65% N₂O by volume. The emissions must therefore be diluted with large quantities of diluting gas, which can only be supplied by large-scale machinery. Several further complications arise if purified emissions are to be used as the dilutant, as they are at high temperature, but low pressure. 1) Since they are at a lower pressure than the N₂O-bearing emissions to be treated, they cannot simply be mixed in, but must first be mechanically re-pressurised by a compressor or booster. 2) Since they are at high temperature, they must paradoxically be cooled to avoid damaging the compressor, and then reheated for the reaction. These inherent inefficiencies in the existing systems render the process expensive.
EP 1040862 discloses a process for catalitically decomposing N₂O in a N₂O-containing gas to be treated, by dividing the N₂O-containing gas stream to be treated in portions, preheating a portion thereof so as to exothermally decompose N₂O in said gas stream to form a hot gas stream, and supplying the remainder of the divided gas stream to be treated into said hot gas stream to thereby continuously decompose N₂O.

The present invention therefore has the following objectives: 1) to provide a system capable of allowing catalytic bed temperatures to be controlled at all times, thus making work at the maximum desired temperature possible. 2) To provide for maximum heat recovery from the decomposition reaction, thus rendering an environmental protection process economically advantageous, as well. 3) To minimise the quantity of gaseous diluting agent required, thus reducing costs arising from devices (installation, etc.) for injecting the diluting flow into the system. 4) To make it possible to work within a temperature range which minimises the formation of NOₓ, making the installation of a downstream NOₓ abatement system unnecessary.

Further objectives of the present invention are 5) to minimise the amount of energy required for triggering and maintaining the reaction, resulting in reduced fuel consumption in the start-up phase and greater heat recovery efficiency during normal operation of the nitrous oxide decomposition plant. 6) To make it possible to start up the reaction at the lowest allowable temperature, reducing the need--in industrial applications--for highly active, but expensive catalysts.

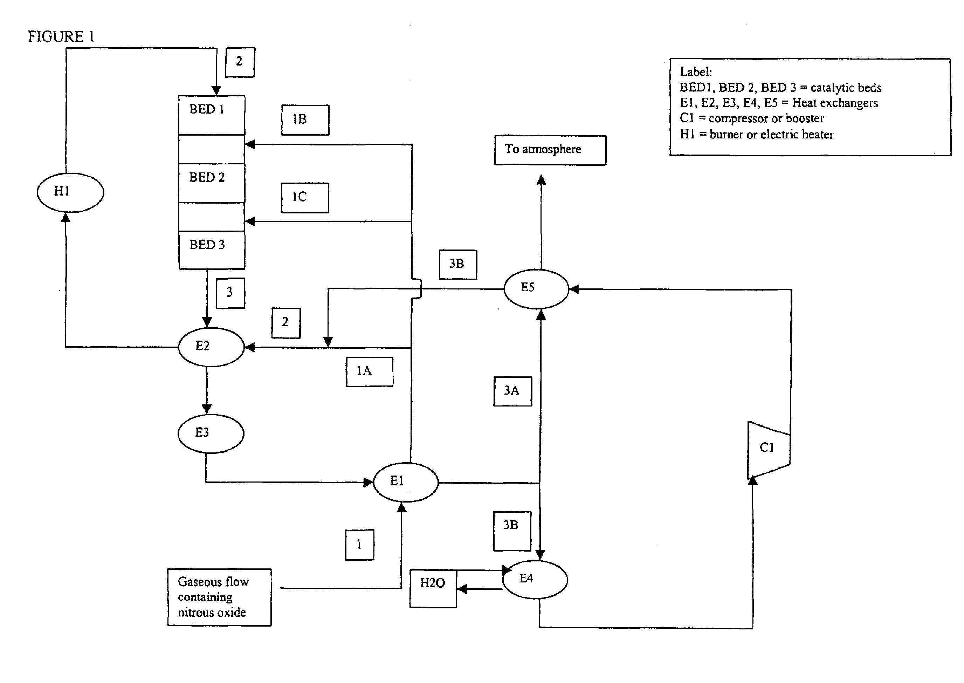

The system we have produced is designed to distribute the catalyst in a series of catalytic beds, whose number may vary as a function of the mass of gas to be treated (figure 1 shows, as an example, the diagram of a 3-bed system). In this way, a number of considerable advantages may be achieved. The first advantage is that of being able to divide the mass of the N₂O-bearin emissions (1) into a series of flows which may be sent at different temperatures to the catalytic beds upstream of the final catalytic bed. In this way, only the amount sent to the first catalytic bed (1A) need be properly diluted with a gaseous stream [which in our case consists of the purified, re-circulated flow (3B)]. This means that the quantity of purified, re-circulated flow can be as little as desired (depending on the number of catalytic beds to which the catalyst is distributed) and thus that the machines needed for re-circulating this flow may be small in size.

Depending on the concentration of N₂O sent to the first catalytic bed, lower or higher temperatures are reached. Although the maximum conversion of nitrous oxide is desirable, it is not necessary for the entire decomposition process to take place on the upstream beds. Using this system set-up, the gas exiting the first catalytic bed (BED 1) may be considered the dilutant gas for the amount of gaseous emissions (1B) to be sent upstream of the second catalytic bed. By blending the two flows appropriately, a gaseous mixture is obtained with the N₂O concentration and temperature desired. This mixture then arrives in the, second catalytic bed (BED 2), where nitrous oxide decomposition takes place. Being able to control N₂O intake concentration also ensures control of the maximum temperature desired in the second catalytic bed. In this manner, the heat contained in the gases exiting the catalytic beds may also be exploited in the most efficient manner. As can be seen, the flow exiting the second bed (BED 2) becomes the dilutant for the subsequent quantity of gas (1C) and this process is repeated according to the number of beds in which the catalyst is distributed.

After the final bed, comes exchanger (E2). By utilising the hot gasses exiting the reactor, this exchanger pre-heats to the minimum start-up temperature the quantity of gas (2) to be sent to the first catalytic bed. Downstream from this exchanger, we find boiler (E3)--which is utilised for generating steam at the desired pressure --or any other heat recovery system. Downstream from the heat recovery system (E3), there is an exchanger (E1), which is needed for pre-heating to the proper temperature the entire volume of the gaseous emissions (1) entering the abatement system. At the outlet of this exchanger, a quantity of purified gas is drawn off (3B), cooled and used to dilute the gas being sent to the first bed. The amount purged (3A) from the system may be utilised again to heat--via exchanger E5--the re-circulated amount.

As is clear from the examples and from the following description, the process using the present invention makes it possible for the exothermia of the nitrous oxide decomposition reaction to be controlled. This is done by utilising a high-temperature, basically nitrous oxide-free gas to dilute a gas containing nitrous oxide and to bring the latter to the minimum start-up temperature of the nitrous oxide decomposition reaction, resulting in advantages which include energy savings.

Thus, the purpose of the present invention is to provide a multi-stage process for the catalytic decomposition of nitrous oxide. The stages are as follows:
(a) a gaseous flow 1 containing nitrous oxide is subdivided into at least two gaseous flows 1 A and 1B;
(b) flow 1A is made to pass through a first catalytic bed (BED1), of the type suitable for nitrous oxide catalytic decomposition, with the resulting decomposition of at least a part of the nitrous oxide it contains;
(c) the off-flow from this catalytic bed is mixed with flow 1B;
(d) The gaseous mixture thus obtained is made to pass through a second catalytic bed (BED2), also of the type suited to nitrous oxide catalytic decomposition and placed downstream of the first catalytic bed (BED1), with the resulting decomposition of at least a part of the nitrous oxide it contains.

In one of the favourite aspects of the invention, gaseous flow 1 is subdivided into at least three gaseous flows (1A, 1B and 1C), in such a way that the gaseous flow exiting the catalytic bed (BED2) is mixed with flow 1C and the mixture thus obtained is made to pass through a third catalytic bed (BED3), placed downstream of catalytic bed 2 (BED2).

Flow 1 is a gaseous emission --normally stemming from the production of adipic acid--usually at the temperature of 25-40° C.

In the start-up phase of the process, flow 1 A is made to pass through a burner or electric heater (H1) to be brought to the start-up temperature of the nitrous oxide decomposition reaction, i.e. to a temperature ranging from 300 to 600° C, preferably between 350 and 550° C. Flow 1A thus enters the catalytic bed (BED1), where nitrous oxide decomposition takes place, and exits the bed at a temperature ranging from 600 to 850°C. The off-flow from the catalytic bed (BED1), now basically nitrous oxide free (or having a nitrous oxide concentration below 500 ppm), is utilised to dilute flow 1B; its temperature thus being brought back to between 300 and 600°C, preferably between 350 e 550°C. The new flow thus obtained enters the next catalytic bed (BED2), where--once again--the nitrous oxide contained in flow 1B is broken down, and exits at a temperature ranging from 600 to 850°C. Should the process require--in accordance with the present invention--the presence of a third flow 1C, this last flow is mixed with the off-flow from previous catalytic bed (BED2), and its temperature is thus brought back to approx. 300-600°C, preferably to from 350 to 550° C, and the new flow thus obtained enters catalytic bed (BED3), where once again, nitrous oxide--contained in flow 1 C--is broken down, the flow exiting at a temperature between 600 and 850° C. Obviously, this sequence may be repeated with the addition of one or more additional flows or one or more additional catalytic beds.

Gaseous flow 3, downstream from the final catalytic bed in the series, exhibits residual nitrous oxide content below 500 ppm and is subdivided into flows 3A e 3B: flow 3A is dispersed into the atmosphere, while flow 3B is mixed with flow 1A and re-circulated into the nitrous oxide decomposition process.

Once at standard operating level, flow 3B is mixed with flow 1A, yielding flow 2; the latter, prior to being made to pass through BED 1, is placed in thermal contact with flow 3 via a heat exchanger (E2). In this manner, flow 2 is brought to start-up temperature of the nitrous oxide decomposition reaction, and no longer requires the activation of burner H1. Upon exiting heat exchanger E2, flow 3 is then placed in thermal contact with flow 1 via heat exchanger E1; in this manner, flow 1 may be heated to a temperature ranging from 70-160° C, preferably between 120-150° C. Additionally, prior to passing through heat exchanger E1, flow 3 may be made to pass through a heat-recovery system E3, preferably a boiler for producing steam.

Under normal operating conditions, when exiting heat exchanger E1, flow 3 has a temperature of approx. 130-180° C. Thus, in order to protect the compressor, flow 3B is brought to a temperature of approx. 40-60° C, preferably 50° C via heat exchanger E4; afterwards, prior to being mixed with flow 1A, flow 3B is brought to a temperature of from 70-160° C, by means of thermal contact with flow 3A via heat exchanger E5.

As in the start-up phase, under normal operating conditions, the flow exiting catalytic bed 1 (BED1), exhibiting a nitrous oxide concentration below 500 ppm, is utilised to dilute flow 1B; its temperature is thus brought back to a range between 300 and 600°C, preferably between 350 and 550°C. The new flow thus obtained enters catalytic bed 2 (BED2), where once again, decomposition of the nitrous oxide contained in flow 1B takes place, and the flow exits at a temperature ranging from 600 to 850°C. Obviously, the same procedure is repeated as required for a third catalytic bed (BED3) or possible additional catalytic beds located downstream of BED3.

The system can be adapted to any gaseous emissions containing nitrous oxide in high concentrations, not necessarily stemming from adipic acid production plants, and also containing higher nitrogen oxides (NOₓ), water and / or oxygen. The scope of this invention is not the nature of the catalyst or its size and shape, but rather the process in which it is utilised. Thus, the use and success of the process described does not depend on the type of catalyst chosen, provided the catalyst adopted is suited to bringing about the nitrous oxide catalytic decomposition reaction. Thus, any and all catalysts capable of breaking down nitrous oxide into gaseous oxygen and nitrogen may be used in the process, and each bed can contain the same or a different catalyst. In the literature, there are numerous works which illustrate catalysts appropriate for the catalytic decomposition of nitrous oxide and which can thus be utilised in the process. The principal classes of active catalysts for the destruction of the nitrous oxide are:
a) catalysts based on noble metals or transition metals or their oxides, variously supported
b) englobed metals supported on zeolites
c) catalysts derived from anionic clays
d) Catalysts not belonging to a specific group but containing different materials.

Some examples of catalysts belonging to the above-mentioned categories arc described in WO 00/23176, WO 00/51715, US 5,612,009, US 5,705,136, US 5,562,888, EP 1197259, WO 94/27709, US 5,171,553, WO 99/34901, WO 94/27709, US 5,472,677, US 5,407,652 and in European Patent Request No. 01830354.5 (filed 30 May 2001 by the same applicant), all cited here as a reference. Among these, the catalysts listed in the examples represent the choice of preference; furthermore, as should be clear from example 3, the catalysts contained in the catalytic beds can be of a different nature.

The strategy of distributing the catalyst over several beds also makes it possible to utilise different catalysts on each catalytic bed. For example, it can be useful to have, on the first bed (BED 1) a catalyst which makes it possible to trigger the reaction at the lowest temperature possible (as is generally the case with precious-metal-based catalysts) and to use--in subsequent beds (BEDs 2 and 3)--less expensive catalysts which are active at higher temperatures.This means that during the start-up phase, the trigger temperature is quickly reached. Given the methods for carrying out our process, once the reaction is underway on the first bed, it is triggered on the downstream beds, as well. In this manner, the amount of energy which must be supplied in (H1), whether electrically, by the combustion of methane or any other fuel in the start-up phase of the system, is further reduced. Furthermore, under normal system operating conditions, the low start-up temperature needed to maintain the reaction requires little pre-heating of the flow (2), allowing for greater heat recovery in (E3).

The classic configuration for multi-stage reactors calls for beds one over the other. However, beds placed co-axially or in separate reactors or with other configurations are also within the scope of the present invention. The number of beds may also vary according to the type of gas which is to be treated.

Our process can be easily managed by computerised process control systems which, however, must be developed as a function of the type of gas to be treated and of the type of catalysts selected for the various catalytic beds.

The following examples--with the understanding that the invention is in no wise limited to or by them--are meant to better illustrate the invention,

### EXAMPLES

Gas analysis was performed using a gas chromatograph with a thermoconducibility detector. In order to enhance analysis reproducibility, a sampling system with pneumatic valves was used. For separating nitrous oxide and carbon dioxide from the nitrogen/oxygen mixture, the column is a *Poropack* Q 160-180 µm (80/100 mesh), length 1.83 m (6 ft), d.e. 3.175 mm (1/8").

For separating the oxygen from the nitrogen, a molecular sieve column--13X, 250-355 µm (45/60 mesh), length 1.219 m (4 ft), d.e 3.175 mm (1/8")―was placed after the first column. Oven temperature for the gas chromatograph was programmed from 40 to 155°C and the flow-rate of the carrier was 30 cc/min.

The system utilised is composed of three superimposed catalytic beds, as illustrated in figure 1. The reactor is of the adiabatic type and was manufactured from Incoloy 800.

The gas utilised comes directly from an adipic acid production plant and has the following composition, varying as a function of the upstream system's operating conditions.

| | |
|---|---|
| Nitrous oxide | 30-40 % by weight |
| Nitrogen | 50-60 % by weight |
| Oxygen | 6-10 % by weight |
| Carbon dioxide | 2% by weight |
| Water | 0.2-0.5% by weight |
| NOₓ | 50-150 ppm |

The following examples illustrate some of the operating conditions under which the plant may be utilised. This is in order to demonstrate the effectiveness of the system in terms of exothermia control and decomposition efficiency. However, at the industrial level, a series of devices may be added designed to simplify and further improve system management.

### Example 1

One of the preferred catalysts for performing experimentation is the one described in EP1197259, supplied by the producer in standard industrial format. This consists of a mixture of lanthanum, copper and manganese oxides, supported on γ-allumina three-lobed, tri-forate pellets.

The catalyst was distributed in the three beds in the following manner:

| Bed | Kg of catalyst |
|---|---|
| BED 1 | 1.5 |
| BED 2 | 3.1 |
| BED 3 | 6.3 |

The intake temperature at BED 1 was maintained at 480°C. For a total system off-gas flow of 52.3 Kg/h, containing 40% nitrous oxide by weight. The following distributions were made:

| Flow | Kg/h |
|---|---|
| 1A | 7.3 |
| 1B | 15 |
| 1C | 30 |
| Total | 52.3 |

The amount of purified flow (3B) was 7,3 kg/h, allowing BED 1 to be fed with an N₂O concentration equivalent to 20% by weight. Under these conditions, the concentration in beds BED2 e BED 3 will always be brought back to 20% by weight, making exothermia control possible. Flows 1B and 1C were fed at 142 °C. Under these conditions, the intake temperature stabilised at approx. 480° C and the off-flow temperature from each bed stabilised at approx. 810°C. The gas hourly space velocity (GHSV) on each bed is 5000 h⁻¹. The concentration of off-flow nitrous oxide from the reactor is 40-100 ppm, with a conversion rate of over 99.9 %. The system was run continuously for 6 months, thus demonstrating-- under the drastic operating temperature conditions which the process requires--the high stability of the catalyst.

### Example 2

Another of the catalysts preferred for carrying out the experimentation is that described in WO99/34901, supplied by the manufacturer in industrial format. It is a zeolite exchanged with iron. The catalyst is extruded. It is well known that zeolite catalysts are sensitive to high temperatures and that as a consequence, nitrous oxide decomposition reactions must be carried out at temperatures generally not exceeding 650°C. In order to achieve this result, it is necessary to work with a gas with a more diluted nitrous oxide content. Because our system only requires the dilution of stream 1A, the volumes of diluting flows to be input into the system can be reduced considerably. Additionally, with these catalysts, the reaction can be triggered at temperatures of around 350 °C, making possible the use of gaseous mixtures rich in nitrous oxide.

The catalyst was distributed in the three beds in the following manner:

| Bed | Kg of catalyst |
|---|---|
| BED 1 | 0.7 |
| BED 2 | 1.1 |
| BED 3 | 1.7 |

The intake temperature at BED 1 was maintained at 350°C. For a total system off-gas flow equivalent to 26.15 Kg/h, containing 40% nitrous oxide by weight, the following distributions were performed:

| Flow | Kg/h |
|---|---|
| 1A | 5.3 |
| 1B | 8.2 |
| 1C | 12.7 |
| Total | 26.2 |

The contribution of purified flow (3B) was 9.7 Kg/h, allowing BED 1 to be fed with an N₂O concentration equivalent to 14% by weight. Under these conditions, the concentration in BEDs 2 and 3 will always be brought back to 14% by weight, making exothermia control possible. Flows 1 Band 1C were fed at approx. 26°C.

The intake temperature at BED 2 stabilised at approx. 400 °C and that at BED 3 at approx. 430 °C. Off-flow temperature from BED 2 stabilised at approx. 630° C, and from BED 3 at 670°. Gas hourly space velocity (GHSV) in each bed was 10000 h⁻¹. Nitrous oxide concentration at reactor outlet was 300-350 ppm with a conversion rate of over 99.5 %.

### Example 3

The distribution of the catalyst in several beds makes it possible to utilise different catalysts on each catalytic bed. In the following example, BED 1 was loaded with the zeolitic catalyst described in example 2, beds BED 2 e BED 3 were loaded with the catalyst defined in example 1. With this set-up, the reaction can be triggered at 350°C.

The catalysts were distributed in the three beds in the following manner:

| Bed | Type of catalyst | Kg of catalyst |
|---|---|---|
| BED 1 | Zeolite WO99/34901 | 0.7 |
| BED 2 | Mixed Oxides EP1197259 supported | 2.2 |
| BED 3 | Mixed Oxides EP1197259 supported | 3.4 |

Intake temperature at BED 1 was maintained at 350°C. For a total system off-gas flow equivalent to 26.15 Kg/h, containing 40% nitrous oxide by weight, the following distributions were performed:

| Flow | Kg/h |
|---|---|
| 1A | 5.3 |
| 1B | 8.2 |
| 1C | 12.7 |
| Total | 26.2 |

The amount of purified flow (3B) was 9.7 Kg/h, making it possible for BED 1 to be fed an N₂O concentration equivalent of 14% by weight. Under these conditions, the concentration in beds BED 2 e BED 3 will always be brought back to 14% by weight, making exothermia control possible. Flows 1B and 1C were fed at approx. 125°C. The intake temperature at BED 2 stabilised at approx. 430 °C, and at BED 3 at approx. 485 °C. Off-flow temperature from BED 2 stabilised at approx. 663°C and from BED 3 at 718°C. The gas hourly space velocity (GHSV) on each bed is 10000 h⁻¹ for BED 1 and 5000 h⁻¹ for BEDs 2 and 3. Nitrous oxide concentration at reactor outlet is 200 ppm with a conversion rate of over 99.8 %.

## Claims

1. A process for the catalytic decomposition of nitrous oxide (N₂O) into gaseous nitrogen and oxygen, consisting of the following stages:
(a) a gas flow 1 containing nitrous oxide is subdivided into two gaseous flows 1A e 1B;
(b) gaseous flow 1A is made to pass through a first catalytic bed (BED1);
(c) the off-flow gas from catalytic bed (BED 1) is mixed with flow 1B;
(d) the gaseous mixture thus obtained is made to pass through a second catalytic bed (BED2) situated downstream of the first catalytic bed (BED1);
(e) the off-flow gas (flow 3) from the last catalytic bed is subdivided into gaseous flow 3A, which is dispersed in the atmosphere, and gaseous flow 3B which, following admixture with flow 1A, is recycled into the nitrous oxide decomposition process as flow 2;
said process being **characterized in that**: (1) gaseous flow 2, before entering catalytic bed (BED1), is brought to a temperature of 300-600°C in heat exchanger E2, via thermal exchange with gaseous flow 3 exiting the last catalytic bed of the series; (2) prior to entering the next catalytic bed (BED2) the temperature of catalytic BED 1 off-flow gas is lowered from 600-850°C to 300-600° C by admixture with gas flow 1B; (3) the temperature of gas flow 1 is brought to 70-160° C by thermal exchange with gas flow 3 in heat exchanger E1 situated downstream from exchanger E2.

2. A process for the catalytic decomposition of nitrous oxide (N₂O) into gaseous nitrogen and oxygen, consisting of the following stages:
(a) a gas flow 1 containing nitrous oxide is subdivided into three gaseous flows 1A, 1B and 1C;
(b) gaseous flow 1A is made to pass through a first catalytic bed (BED 1);
(c) the off-flow gas from catalytic bed (BED 1) is mixed with flow 1B;
(d) the gaseous mixture thus obtained is made to pass through a second catalytic bed (BED2) situated downstream of the first catalytic bed (BED 1 );
(e) the off-flow gas from the catalytic bed (BED2) is mixed with flow 1C:
(f) the gaseous mixture thus obtained is made to pass through a third catalytic bed (BED3):
(g) the off-flow gas (flow 3) from the last catalytic bed is subdivided into gaseous flow 3A. which is dispersed in the atmosphere, and gaseous flow 3B which, following admixture with flow 1A. is recycled into the nitrous oxide decomposition process as flow 2:
said process being **characterized in that**: (1) gaseous flow 2, before entering catalytic bed (BED1), is brought to a temperature of 300-600°C in heat exchanger E2, via thermal exchange with gaseous flow 3 exiting the last catalytic bed of the series; (2) prior to entering the next catalytic bed (BED2), the temperature of catalytic BED 1 off-flow gas is lowered from 600-850°C to 300-600° C by admixture with gas flow 1B; (3) prior to entering the next catalytic bed (BED3), the temperature of catalytic BED2 off-flow gas is brought from 600-800°C to 300-600°C by admixture with gas flow 1C; (4) the temperature of gas flow 1 is brought to 70-160° C by thermal exchange with gas flow 3 in heat exchanger E1 situated downstream from exchanger E2.

3. A process, according to claim 1, **characterised by** the fact that gaseous flow 2 exhibits an N₂O concentration ranging from 9 to 20% by weight.

4. A process, according to the preceding claims, **characterised by** the fact that each gaseous intake flow at each catalytic bed exhibits an N₂O concentration ranging from 9 to 20% by weight.

5. A process, according to claim 1, **characterised by** the fact that--prior to entering the next catalytic bed (BED2)--the temperature of catalytic BED 1 off-flow gas is lowered from 600-850°C to 350-550° C by admixture with gas flow 1B.

6. A process, according to claim 2, **characterised by** the fact that-- prior to entering the next catalytic bed (BED3)--the temperature of catalytic BED2 off-flow gas is brought from 600-800°C to 300-600°C by admixture with gas flow 1C.

7. A process, according to claim 6, **characterised by** the fact that--prior to entering the next catalytic bed (BED3)--the temperature of second catalytic bed (BED2) off-flow gas is brought from 600-800°C to 350-550° C by admixture with gaseous flow 1C.

8. A process, according to the preceding claims, **characterised by** the fact that by thermal exchange with gas flow 3 in heat exchanger E1 situated downstream from exchanger E2, the temperature of gas flow 1 is brought to 120-150° C.

9. A process, according to the preceding claims, **characterised by** the fact that, after having yielded part of its own heat--via heat exchanger E3, situated downstream of exchanger E2 and upstream of exchanger E1--to heat the mixture consisting of flows 1A and 3B, flow 3 is utilised to generate steam.

10. A process, according to the preceding claims, **characterised by** the fact that the catalyst contained in catalytic bed BED1 can be the same or different from the catalyst(s) contained in catalytic beds BED2 and/or BED3.

11. A process, according to the preceding claims, **characterised by** the fact that gas flow 1 may contain higher nitrogen oxides (NOₓ), water and/or oxygen.

12. A process, according to the preceding claims, **characterised by** the fact that gas flow 1 may contain up to 2000 ppm of higher nitrogen oxides (NOₓ), water up to saturation and/or oxygen up to 15% in volume.

13. A process, according to the preceding claims, **characterized in that** gaseous flow 2 is brought to a temperature of 350-550°C.

## Revendications

1. Un procédé pour la décomposition catalytique du protoxyde d'azote (N₂O) en azote et oxygène gazeux, qui consiste des passages suivants:
(a) un flux de gaz 1 contenant protoxyde d'azote est subdivisé en deux flux gazeux 1A et 1B;
(b) on fait passer le flux gazeux 1A à travers un premier lit catalytique (LIT1);
(c) le gaz qui reflue du lit catalytique (LIT1) est mélangé avec le flux 1B;
(d) on fait passer le mélange gazeux obtenu de cette façon à travers un deuxième lit catalytique (LIT2) situé en aval du premier lit catalytique (LIT1);
(e) le gaz qui reflue (flux 3) du dernier lit catalytique est subdivisé dans le flux gazeux 3A, qui est dispersé dans l'atmosphère, et le flux gazeux 3B qui, en suivant le mélange avec le flux 1A, est recyclé dans le procédé de décomposition du protoxyde d'azote comme flux 2;
dit procédé étant **caractérisé par le fait que**: (1) le flux gazeux 2, avant de rentrer dans le lit catalytique (LIT1), est porté à une température de 300-600°C dans l'échangeur de chaleur E2, par échange thermique avec le flux gazeux 3 qui est en train de sortir du dernier lit catalytique de la série; (2) avant de rentrer dans le prochain lit catalytique (LIT2), la température du gaz qui reflue du LIT catalytique 1 est baissée de 600-850°C à 300-600° C par le mélange avec le flux de gaz 1B; (3) la température du flux de gaz 1 est portée à 70-160° C par échange thermique avec le flux de gaz 3 dans l'échangeur de chaleur E1 situé an aval de l'échangeur E2.

2. Un procédé pour la décomposition catalytique du protoxyde d'azote (N₂O) en azote et oxygène gazeux, qui consiste des passages suivants:
(f) un flux de gaz 1 contenant protoxyde d'azote est subdivisé dans trois flux gazeux 1A, 1B et 1C;
(g) on fait passer le flux gazeux 1A à travers un premier lit catalytique (LIT1);
(h) le gaz qui reflue du lit catalytique (LIT1) est mélangé avec le flux 1B;
(i) on fait passer le mélange gazeux obtenu de cette façon à travers un deuxième lit catalytique (LIT2) situé an aval du premier lit catalytique (LIT 1 );
(j) le gaz qui reflue du lit catalytique (LIT2) est mélangé avec le flux 1C;
(k) on fait passer le mélange gazeux obtenu de cette façon à travers un troisième lit catalytique (LIT3):
(1) le gaz qui reflue du (flux 3) dernier lit catalytique est subdivisé dans le flux gazeux 3A qui est dispersé dans l'atmosphère et le flux gazeux 3B qui, à la suite du mélange avec le flux 1A. est recyclé dans le procédé de décomposition du protoxyde d'azote comme flux 2,
dit procédé étant **caractérisé par le fait que**: (1) le flux gazeux 2, avant de rentrer dans le lit catalytique (LIT1), est porté à une température de 300-600°C dans l'échangeur de chaleur E2, par échange thermique avec le flux gazeux 3 qui est en train de sortir du dernier lit catalytique de la série; (2) avant de rentrer dans le prochain lit catalytique (LIT2). la température du gaz qui refluedu LIT catalytique 1 est baissée de 600-850°C à 300-600° C par mélange avec le flux de gaz 1B: (3) avant de rentrer dans le lit catalytique successif (LIT3), la température du gaz qui reflue du LIT catalytique 2 est portée de 600-800°C à 300-600°C par mélange avec le flux de gaz 1C; (4) la température du flux de gaz 1 est portée à 70-160° C par échange thermique avec le flux de gaz 3 dans l'échangeur de chaleur E1 situé en aval de l'échangeur E2.

3. Un procédé, selon la revendication 1, **caractérisé par le fait que** le flux gazeux 2 présente une concentration de N₂O qui varie du 9 au 20% by en poids.

4. Un procédé, selon les revendications précédentes, **caractérisé par le fait que** chaque flux d'injection gazeuse dans chaque lit catalytique présente une concentration de N₂O qui varie du 9 au 20% en poids.

5. Un procédé, selon la revendication 1, **caractérisé par le fait que**―avant de rentrer dans le lit catalytique successif (LIT2)--la température du gaz qui reflue du LIT catalytique 1 est baissée de 600-850°C à 350-550° C par mélange avec le flux de gaz 1B.

6. Un procédé, selon la revendication 2, **caractérisé par le fait que**―avant de rentrer dans le lit catalytique successif (LTT3)--1a température du gaz qui reflue du LIT catalytique 2 est portée de 600-800°C à 300-600°C par mélange avec le flux de gaz 1C.

7. Un procédé, selon la revendication 6, **caractérisé par le fait que**―avant de rentrer dans le lit catalytique successif (LIT3)―la température du gaz qui reflue du deuxième lit catalytique (BED2) est portée de 600-800°C à 350-550° C par mélange avec le flux gazeux 1C.

8. Un procédé, selon les revendications précédentes, **caractérisé par le fait que** par échange thermique avec le flux de gaz dans l'échangeur de chaleur E1 situé en aval de l'échangeur E2, la température du flux de gaz 1 est portée à 120-150° C.

9. Un procédé, selon les revendications précédentes, **caractérisé par le fait que**, après avoir cédé une partie de sa chaleur―par l'échangeur de chaleur E3, situé en aval de l'échangeur E2 en amont de l'E1―pour chauffer le mélange consistant des flux 1A et 3B, le flux 3 est utilise pour produire du vapeur.

10. Un procédé, selon les revendications précédentes, **caractérisé par le fait que** le catalyseur contenu dans le lit catalytique LIT1 peut être le même ou différent du (des) catalyseur(s) contenu(s) dans les lits catalytiques LIT2 et/ou LIT3.

11. Un procédé, selon les revendications précédentes, **caractérisé par le fait que** le flux de gaz 1 peut contenir oxydes d'azote (NOₓ) plus hauts, eau et/ou oxygène.

12. Un procédé, selon les revendications précédentes, **caractérisé par le fait que** le flux de gaz 1 peut contenir jusqu'à 2000 ppm d'oxydes d'azote (NOₓ) plus hauts, eau jusqu'à saturation et/ou oxygène jusqu'au 15% en volume.

13. Un procédé, selon les revendications précédentes, **caractérisé par le fait que** le flux gazeux 2 est porté à une température de 350-550°C.

## Patentansprüche

1. Ein Verfahren für die katalytische Zersetzung von Stickstoffprotoxyd (N₂O) in gasförmige Stickstoff und Sauerstoff, das aus den folgenden Übergänge besteht:
(a) ein Gasfluß 1, der Stickstoffprotoxyd enthält, wird in zwei gasförmige Flüsse 1A und 1B geteilt;
(b) man lässt den gasförmige Fluß 1A durch ein erstes katalytisches Bett (BETT1);
(c) der Gasfluß vom katalytischen Bett (BETT1) wird mit dem Fluß 1B gemischt;
(d) man lässt das erhaltene Gasgemisch durch ein zweites katalytisches Bett (BETT2), das unterhalb des ersten katalytischen Bettes (BETT1) liegt;
(e) der Gasfluß (Fluß 3) vom letzten katalytischen Bett wird in den gasförmigen Fluß 3A, der in der Atmosphäre zerstreut wird, und in den gasförmigen Fluß 3B, der nach dem Gemisch mit dem Fluß 1A im Zersetzungsverfahren vom Stickstoffprotoxyd als Fluß 2 rezykliert wird, geteilt;
dieses Verfahren ist **gekennzeichnet durch**: (1) bevor der gasförmige Fluß 2 ins katalytische Bett (BETT1) eintritt, wird er **durch** den Thermalaustausch mit dem gasförmigen Fluß 3, der aus dem letzten katalytischen Bett geht, im Wärmeaustauscher E2 zu einer Temperatur von 300-600°C geführt; (2) bevor der Gasfluß vom katalytischen BETT ins folgende katalytische Bett (BETT2) eintritt, wird seine Temperatur von 600-850°C zu 300-600° C **durch** das Gemisch mit dem Gasfluß 1B geführt, (3) die Temperatur vom Gasfluß 1 wird zu 70-160°C **durch** den Thermalaustausch mit dem Gasfluß 3 im Wärmeaustauscher E1, der unterhalb des Austauschers E2 liegt, geführt.

2. Ein Verfahren für die katalytische Zersetzung von Stickstoffprotoxyd (N₂O) in gasförmige Stickstoff und Sauerstoff, das aus den folgenden Übergänge besteht:
(f) ein Gasfluß 1, der Stickstoffprotoxyd enthält, wird in drei gasförmige Flüsse 1A, 1B und 1C geteilt;
(g) man lässt den gasförmige Fluß 1A durch ein erstes katalytisches Bett (BETT1 );
(h) der Gasfluß vom katalytischen Bett (BETT1) wird mit dem Fluß 1B gemischt;
(i) man lässt das erhaltene Gasgemisch durch ein zweites katalytisches Bett (BETT2), das unterhalb des ersten katalytischen Bettes (BETT1) liegt;
(j) das Gasfluß vom katalytischen Bett (BETT2) wird mit dem Fluß 1C gemischt;
(k) man lässt das erhaltene Gasgemisch durch ein drittes katalytisches Bett (BETT3);
(1) der Gasfluß (Fluß 3) vom letzten katalytischen Bett wird in den gasförmigen Fluß 3A, der in der Atmosphäre zerstreut wird, und in den gasförmige Fluß 3B, der nach dem Gemisch mit dem Fluß 1A im Zersetzungsverfahren vom Stickstoffprotoxyd als Fluß 2 rezykliert wird, geteilt;
dieses Verfahren ist **gekennzeichnet durch**: (1) bevor der gasförmige Fluß 2 ins katalytische Bett (BETT1) eintritt, wird er **durch** dem Thermalaustausch mit dem gasförmigen Fluß 3, der aus dem letzten katalytischen Bett geht, im Wärmeaustauscher E2 zu einer Temperatur von 300-600°C geführt; (2) bevor der Gasfluß vom katalytischen BETT1 ins folgende katalytische Bett (BETT2) eintritt wird seine Temperatur von 600-850°C zu 300-600°C **durch** das Gemisch mit dem Gasfluß 1B geführt; (3) bevor der Gasfluß vom katalytischen BETT2 ins folgende katalytische Bett (BETT3) eintritt, wird seine Temperatur von 600-800°C zu 300-600°C **durch** das Gemisch mit dem Gasfluß 1C geführt; (4) die Temperatur vom Gasfluß 1 wird zu 70-160°C **durch** Thermalaustausch mit dem Gasfluß 3 im Wärmeaustauscher E1, der unterhalb des Austauschers E2 liegt, geführt.

3. Ein Verfahren, das entsprechend dem Anspruch 1 **gekennzeichnet ist dadurch**, daß der gasförmige Fluß 2 eine N₂O-Konzentration zeigt, die von 9 zu 20% im Gewicht geht.

4. Ein Verfahren, das entsprechend den vorherigen Ansprüchen **gekennzeichnet ist dadurch**, daß jeder Fluß von gasförmige Einführung in jedem katalytischen Bett eine N₂O-Konzentration zeigt, die von 9 zu 20% im Gewicht geht.

5. Ein Verfahren, das entsprechend dem Anspruch 1 **gekennzeichnet ist dadurch**, daß--bevor der Gasfluß vom katalytischen BETT1 ins folgende katalytische Bett (BETT2) eintritt―seine Temperatur von 600-850°C zu 350-550° C **durch** das Gemisch mit dem Gasfluß 1B geführt wird.

6. Ein Verfahren, das entsprechend dem Anspruch 2 **gekennzeichnet ist dadurch**, daß―bevor der Gasfluß vom katalytischen BETT2 ins folgende katalytische Bett (BETT3) eintritt―seine Temperatur von 600-800°C zu 300-600°C **durch** das Gemisch mit dem Gasfluß 1C geführt wird.

7. Ein Verfahren, das entsprechend dem Anspruch 6 **gekennzeichnet ist dadurch**, daß―bevor der Gasfluß von dem zweiten katalytischen Bett (BETT2) ins folgende katalytische Bett (BETT3) eintritt―seine Temperatur von 600-800°C zu 350-550° C **durch** das Gemisch mit dem gasförmigen Fluß 1C geführt wird.

8. Ein Verfahren, das entsprechend den vorherigen Ansprüchen **gekennzeichnet ist dadurch**; daß **durch** den Thermalaustausch mit dem Gasfluß 3 im Wärmeaustauscher E1, der unterhalb des Austauschers E2 liegt, die Temperatur vom Gasfluß 1 zu 120-150° C geführt wird.

9. Ein Verfahren, das entsprechend den vorherigen Ansprüchen **gekennzeichnet ist dadurch**, daß der Fluß 3 verwendet wird, um Dampf zu erzeugen, seit er einen Teil seiner Wärme übergelassen hat,―durch den Wärmeaustauscher E3, der unterhalb des Austauschers E2 und stromaufwärts vom Austauscher EI―um das Gemisch von den Flüssen 1A und 3B zu wärmen.

10. Ein Verfahren, das entsprechend den vorherigen Ansprüchen **gekennzeichnet ist dadurch**, daß der Katalysator im katalytischen Bett BETT1 derselbe oder verschieden von dem (den) Katalysator(en) im katalytischen Betten BETT2 und/oder BETT3 sein kann.

11. Ein Verfahren, das entsprechend den vorherigen Ansprüchen **gekennzeichnet ist dadurch**, daß der Gasfluß 1 höhere Stickstoffoxyde (NOₓ), Wasser und/oder Sauerstoff enthalten kann.

12. Ein Verfahren, das entsprechend den vorherigen Ansprüchen **gekennzeichnet ist dadurch**, daß der Gasfluß 1 bis 2000 ppm von höhere Stickstoffoxyde (NOₓ), Wasser bis Sättigung und/oder Sauerstoff bis 15% in der Masse enthalten kann.

13. Ein Verfahren, das entsprechend den vorherigen Ansprüchen **gekennzeichnet ist dadurch**, daß der gasförmige Fluß 2 zu einer Temperatur von 350-550°C geführt wird.
